Europäisches Patentamt

European Patent Office

Office européen des brevets

(11) Veröffentlichungsnummer: **0 280 977 B1**

(12) **EUROPÄISCHE PATENTSCHRIFT**

(45) Veröffentlichungstag der Patentschrift: **14.10.92**

(21) Anmeldenummer: **88102521.7**

(22) Anmeldetag: **20.02.88**

(51) Int. Cl.5: **C08L 67/02**, //(C08L67/02,9:00)

(54) **Mit funktionalisierten Polymeren schlagzäh modifizierte Thermoplaste und deren Verwendung zur Herstellung von Formteilen.**

(30) Priorität: **25.02.87 DE 3706017**

(43) Veröffentlichungstag der Anmeldung:
**07.09.88 Patentblatt 88/36**

(45) Bekanntmachung des Hinweises auf die
Patenterteilung:
**14.10.92 Patentblatt 92/42**

(84) Benannte Vertragsstaaten:
**AT BE DE FR GB IT NL**

(56) Entgegenhaltungen:
**EP-A- 0 180 472**
**AT-B- 295 860**
**DE-A- 2 364 318**

(73) Patentinhaber: **BASF Aktiengesellschaft**
**Carl-Bosch-Strasse 38**
**W-6700 Ludwigshafen(DE)**

(72) Erfinder: **Bronstert, Klaus, Dr.**
**Gartenstrasse 26**
**W-6719 Carlsberg(DE)**
Erfinder: **Schwaben, Hans-Dieter, Dr.**
**Lindenstrasse 3**
**W-6721 Freisbach(DE)**
Erfinder: **Echte, Adolf, Dr.**
**Leuschnerstrasse 42**
**W-6700 Ludwigshafen(DE)**

EP 0 280 977 B1

**Beschreibung**

Die Erfindung betrifft schlagzäh modifizierte Thermoplastmischungen. Derartige Mischungen werden zur Herstellung von Formteilen verwendet.

Die Schlagzähigkeit von thermoplastischen Polyestern kann dadurch verbessert werden, daß man kautschukelastische Polymerisate zumischt, die über Emulsionspolymerisationen erhalten wurde. Dies ist z.B. in den Druckschriften DE-A 16 94 173, DE-C 23 48 377, EP-B 22 216 EP-A 187 313 beschrieben.

Die hierzu nötigen Emulsionspolymerisate sind aufwendig, teuer und nur schwer reproduzierbar herzustellen, wobei insbesondere die mangelnde Gleichmäßigkeit der Pfropfhülle in verschiedenen Ansätzen zu Schwankungen in der Produktqualität führen kann.

Desgleichen offenbaren die AT-A-295860 und die DE-A-2 364 318 die Verbesserung der Schagzähigkeit von PET und PBT durch Zugabe eines Styrol-Butadien Misch-Polymerisats.

Damit stellt sich die Aufgabe, eine Weichkomponente zu finden, die einfach, preisgünstig und gut reproduzierbar herzustellen ist und mit der die Thermoplastkomponente besser schlagzäh modifiziert werden kann.

Diese Aufgabe wurde durch Bereitstellung einer Thermoplastmischung gemäß Patentanspruch 1 gelöst.

Nachfolgend werden der Aufbau der erfindungsgemäßen Thermoplastmischungen sowie das zu ihrer Herstellung verwendete Verfahren und die erforderlichen Ausgangsstoffe und Hilfsmittel beschrieben.

Die Thermoplastmischungen bestehen aus den Komponenten A, B und gegebenenfalls C. Bevorzugte Thermoplastmischungen bestehen aus den Komponenten A und B. Die Mischungen können noch übliche Zusatzstoffe als Komponente C in üblichen Mengen enthalten.

Die polymere Formmasse besteht, jeweils bezogen auf die Summe der Gewichte aus A und B:

A) 99-60, bevorzugt 95-65, Gew.% einer polymeren Hartmatrix

Die polymere Hartmatrix besteht aus einem Polybutylenterephthalat oder einem Polyethylenterephthalat.

B) 1-40, bevorzugt 5 bis 35, Gew.% einer polymeren Weichkomponente

Die polymere Weichkomponente enthält einpolymerisiert die Monomeren, bezogen auf B, in Mengen von
b1) 100-60, bevorzugt 100-70 Gew.%,
b2) 0-40, bevorzugt 0 bis 30 Gew.%.

Bezogen auf 100 Gewichtsteile der Summe der Komponenten A und B kann die polymere Formmasse 0 bis 30, bevorzugt 0-25 Gewichtsteile der Komponente C, das sind übliche Zusatzstoffe, enthalten.

Im einzelnen besteht die Formmasse aus

**Komponente A**

Die Komponente A ist ein Polybutylenterephthalat, das durch eine Polykondensation, wie sie z.B. in der Druckschrift FR-A 2 177 846 oder FR-A 2 186 510 beschrieben ist, hergestellt werden kann. Die Komponente A kann auch ein Polyethylenterephthalt sein, wie sie z.B. in den US-Patenten 2 465 319 und 3 047 539 beschrieben ist. Die Viskositätszahl einer 0,5 gew.%igen Lösung in Dichlorbenzol/Phenol (1:1) der obigen Polyalkylenterephthalate bei 25°C soll bevorzugt zwischen 100 und 180 ml/g, insbesondere zwischen 100 und 150 ml/g liegen.

**Komponente B**

Sie enthält
b1) als Ausgangsmonomer mindestens ein 1,3-Dien. Vorzugsweise wird ausschließlich Butadien verwendet. Als weitere Ausgangscomonomere können
b2) Monovinylaromaten, vorzugsweise Styrol, eingesetzt werden.

Die Thermoplastkomponente B muß mit Aminogruppen terminiert sein.

Die polymere Komponente B wird hergestellt z.B. durch anionische Polymerisation von Butadien und Abbruch mit 1,5-Diazabicyclo[3,1,0]hexan. Das Verfahren ist in der EP-A-211 395 ausführlich beschrieben, so daß eine zusätzliche Beschreibung hier entfallen kann.

Das Molekulargewicht der Komponente B liegt im allgemeinen im Bereich zwischen 30000 und 400000 g/mol (Gewichtsmittel), vorzugsweise zwischen 50000 und 300000 g/mol, insbesondere zwischen 60000 und 250000 g/mol, bestimmt mittels Gelpermeationschromatographie.

Bevorzugt als polymerer Ausgangsstoff für die Komponente B sind Homopolybutadiene bzw. Blockcopolymerisate des Butadiens mit einem Anteil von bis zu 40 Gew.% Styrol. Der Übergang zwischen den Blöcken kann scharf oder verschmiert sein.

2

Komponente C

Als Zusatzstoffe bei der Herstellung der erfindungsgemäßen Formmassen können, wie dem Fachmann bekannt, Mineralöle, Antistatika, Flammschutzmittel, Pigmente, Stabilisatoren und andere die Gebrauchseigenschaften verbessernde übliche Zuschläge in Mengen von 0 bis 30, bevorzugt 0 bis 25 Gew.%, bezogen auf 100 Gewichtsteile der Summe aus den Komponenten A und B, eingesetzt werden.

Die Herstellung der Mischungen kann durch beliebige Einrichtungen, die eine homogene Durchmischung der Komponenten A und B in der Schmelze erlauben, wie z.B. Walzwerke, Kneter oder Extruder, erfolgen. Dabei können beide Komponenten, gegebenenfalls auch die Komponente C, vorher gemischt oder getrennt dosiert werden. Die Herstellungstemperatur liegt zwischen 150 und 350 ° C, vorzugsweise zwischen 200 und 300 ° C.

Möglich, aber weniger bevorzugt, ist auch das Mischen der Lösungen der Komponente A und B, gefolgt von einer anschließenden Entfernung des Lösungsmittels.

Die nachfolgenden Beispiele und Vergleichsversuche sollen die Erfindung näher erläutern, ohne jedoch ihre Breite zu schmälern. Es wurden jeweils 10 Gew.% der Komponente B und 90 Gew.% der Komponente A verwendet.

In den Beispielen 1 und 2 wurde als Komponente B ein Zweiblockcopolymeres aus 9 Gew.% Styrol und 91 Gew.% Butadien mit scharfem Blockübergang und einem Molekulargewicht (GPC-Mittel) von 75000 g/mol eingesetzt, bei dem das Polybutadienende mit einer 1,3-Propylendiaminendgruppe gemäß EP-A-211 395 Beispiel 3 modifiziert war.

In den entsprechenden Vergleichsversuchen (VV) wurden als Komponente B ein nicht funktionalisiertes Homopolybutadien mit einer Lösungsviskosität von 130 ml/g (5 gew.%ig in Toluol bei 25 ° C) eingesetzt.

Bei den Polymeren der Komponente A handelt es sich um ein handelsübliches Polybutylenterephthalat (ULTRADUR B 4500 der BASF) im Beispiel 1 oder ein handelsübliches Polyethylenterephthalat (ULTRADUR A 1550 der BASF ) im Beispiel 2.

Die Herstellung der Formmassen erfolgte auf einem Zweischneckenextruder ZSK 30 der Fa. Werner und Pfleiderer bei Temperaturen zwischen 250 und 300 ° C. Die als Polymerstränge austretenden Formmassen wurden im Wasserbad abgekühlt, dann granuliert, getrocknet und anschließend die Schlagzähigkeit als Lochkerbschlagzähigkeit nach DIN 53753 bestimmt.

**Tabelle**

| | aKL (kJ/m$^2$) | aKL (kJ/m$^2$) des nicht modifizierten Thermoplasten |
|---|---|---|
| Bsp. 1 | 20,1 | 12,0 |
| VV. 1 | 13,1 | |
| Bsp. 2 | 25,5 | 19,5 |
| VV. 2 | 20,6 | |

**Patentansprüche**

1. Schlagzäh modifizierte Thermoplastmischungen bestehend aus
   A) 99 bis 60 Gewichtsprozent, bezogen auf die Summe aus A und B, einer polymeren Hartmatrix aus
      a1) Polybutylenterephthalat oder
      a2) Polyethylentherephthalat
   B) 1 bis 40 Gewichtsprozent, bezogen auf die Summe aus A und B, einer polymeren Weichkomponente aus
      b1) 100-60 Gewichtsprozent eines einpolymerisierten Monomeren aus der Gruppe der 1,3-Diene und
      b2) 0-40 Gewichtsprozent eines einpolymerisierten Vinylaromaten, wobei die Gewichtsprozente

3

jeweils bezogen sind auf die Summe aus b1 und b2
sowie

C) 0 bis 30 Gewichtsprozent, bezogen auf 100 Gewichtsteile der Summe aus den Komponenten A und B, übliche Zusatzstoffe,

dadurch gekennzeichnet, daß die Polymeren der Weichkomponente B endständig mit Aminogruppen versehen sind.

2.   Verwendung der schlagzäh modifizierten Thermoplastmischung nach Anspruch 1 zur Herstellung von Formteilen.

**Claims**

1.   An impact modified thermoplastic blend consisting of:

A) from 99 to 60 percent by weight, based on the sum of A and B, of a polymeric hard matrix consisting of

a1) polybutylene terephthalate or

a2) polyethylene terephthalate

B) from 1 to 40 percent by weight, based on the sum of A and B, of a polymeric soft component consisting of

b1) 100-60 percent by weight of a monomer from the group of the 1,3-dienes which is present as copolymerized units and

b2) 0-40 percent by weight of an aromatic vinyl compound present as copolymerized units, the weight percentages in each case being based on the sum of b1 and b2,

and also

C) from 0 to 30 percent by weight, based on 100 parts by weight of the sum of components A and B, of customary additives,

wherein the polymers of soft component B have amino end groups.

2.   Use of an impact modified thermoplastic blend as claimed in claim 1 for producing moldings.

**Revendications**

1.   Mélanges de thermoplastes modifiés dans le sens de la résistance aux chocs, se composant de

A) 99 à 60% en poids, par rapport à la somme de A et B, d'une matrice polymère dure formée

a1) de polytéréphtalate de butylène et

a2) de polytéréphtalate d'éthylène,

B) 1 à 40% en poids, par rapport à la somme de A et B, d'un composant polymère mou formé

b1) de 100-60% en poids d'un monomère du groupe des 1,3-diènes en liaison polymère et

b2) de 0-40% en poids d'un carbure vinylaromatique en liaison polymère, les pourcentages en poids se rapportant chaque fois à la somme de b1 et b2,

ainsi que de

C) 0 à 30% en poids, par rapport à 100 parties en poids de la somme des composants A et B, d'additifs usuels,

caractérisés en ce que les polymères du composant B comportent des groupements amino en fin de chaîne.

2.   Utilisation du mélange modifié dans le sens de la résistance aux chocs selon la revendication 1 pour la fabrication de pièces moulées.